# EUROPEAN PATENT SPECIFICATION

(11) **EP 4 113 907 B1**
(45) Date of publication and mention of the grant of the patent: **10.12.2025**
(21) Application number: 21759844.0
(22) Date of filing: 02.02.2021
(51) Int. Cl.: H04L 12/12

(54) **EDGE COMPUTING DEVICE MANAGEMENT METHOD AND APPARATUS, DEVICES, AND SYSTEM**
VERFAHREN UND VORRICHTUNG ZUR VERWALTUNG VON EDGE-COMPUTING-VORRICHTUNGEN, VORRICHTUNGEN UND SYSTEM
PROCÉDÉ ET APPAREIL DE GESTION DE DISPOSITIF INFORMATIQUE DE PÉRIPHÉRIE, DISPOSITIFS, ET SYSTÈME

(30) Priority: 25.02.2020 CN 202010117320
(43) Date of publication of application: 04.01.2023
(73) Proprietor: Qingdao Haier Washing Machine Co., Ltd., Qingdao, Shandong 266101 (CN); Haier Smart Home Co., Ltd., Qingdao, Shandong 266101 (CN)
(72) Inventor: WANG, Zizhen, Qingdao, Shandong 266101 (CN); HUANG, Zhenxing, Qingdao, Shandong 266101 (CN); XU, Sheng, Qingdao, Shandong 266101 (CN)
(74) Representative: Bandpay & Greuter
(86) International application number: PCT/CN2021/074852
(87) International publication number: WO 2021/169752

(56) References cited:
- CN-A- 104 460 328
- CN-A- 108 536 030
- CN-A- 109 945 296
- US-A1- 2017 277 574
- US-A1- 2019 101 876
- US-A1- 2019 222 432
- US-A1- 2019 364 492

## Description

### TECHNICAL FIELD

The present application relates to the technical field of intelligent devices, in particular to an edge computing device management method and apparatus, a device and a system.

### BACKGROUND

With the development of network technology and with the advent of Internet of everything, more and more IOT (Internet of Things) devices are accessed at home. The IOT devices, data information generated by the devices and the data linkage between the devices all need management and data processing.

In the prior art, for the data communication between different types of IOT devices and the management of IOT devices, ZigBee (zigbee) wireless network protocol, Wireless-Fidelity (Wireless-Fidelity, Wifi) network protocol, Bluetooth (Bluetooth) network protocol and Bluetooth Low Energy (Bluetooth Low Energy, BLE) are usually used for data transmission. The gateways of the existing IOT devices are not unified, and thus a user need to install a variety of gateway devices for matching different communication modes.

In the prior art, the IOT devices adopt a variety of gateways, and the user needs to install a variety of gateway devices for matching different communication modes, resulting in a high cost.

US2019/0101876A1 discloses an edge device monitoring a mechanical system for changes in vibration state. When an overall vibration state of the mechanical system deviates by at least a threshold from an expected vibration state, the edge device can send the data to a server for diagnostic processing. The edge device can thus monitor for a pre-failure condition that suggests an upcoming failure or a need for service. With selective sending of sensor data, the bandwidth and processing associated with diagnostics can be reserved for situations more likely indicative of a condition needing diagnosing, rather than performing constant diagnostic processing.

### SUMMARY

The present application provides an edge computing device management method and apparatus, a device and a system, in which a first device serves as an edge computing node and at least one second device serves as an access node, a node network is thus formed, which enables the second device to be managed through the first device. The first device may have one or more gateway functions selected from a WiFi gateway function, a BLE gateway function, a ZigBee gateway function and the like. The installation of a variety of gateway devices for matching different communication modes is avoided, and the cost is effectively saved. The present invention is set out in the appended set of claims.

In a first aspect, embodiments of the present application provides an edge computing device management method, the method including:
acquiring original information, where the original information includes sensing information and/or state information, the sensing information is sent by at least one sensor, the at least one sensor is connected with a first device, the state information represents a working state of the first device, and the first device is an edge computing node;
determining a first control instruction, according to the sensing information and/or the state information; and
sending the first control instruction to a second device to make the second device work according to the first control instruction, where the second device is an access node, and the first device is connected with at least one second device.

In the embodiments of the present application, the first device serves as an edge computing node and the at least one second device serves as an access node, a node network is thus formed, which enables communication modes of multiple second devices to be unified. As such, the installation of a variety of gateway devices for matching different communication modes is avoided, and the cost is effectively saved. Moreover, the first device determines the first control instruction according to the sensing information and/or the state information, where the sensor may be installed in the first device or the second device, or the sensor may be independent of the first device and the second device; accordingly, the second device is caused to work according to the first control instruction, enabling the management of the second device through the first device.

In a possible implementation, the edge computing device management method provided by the embodiments of the present application further includes:
receiving a second control instruction sent by a third device, where the second control instruction includes an identifier of a target second device, and the target second device is any one of the at least one second device; and
sending, according to the identifier of the target second device, the second control instruction to the target second device, to make the target second device work according to the second control instruction.

In the embodiments of the present application, the first device may also receive the control instruction sent by the third device, thereby enabling the management and control of the second device by the third device. The third device may be a terminal device, and the third device communicates with the first device through a cloud server. The embodiments of the present application are not limited thereto.

In a possible implementation, the first device is a washing machine, and the at least one second device includes at least one of: an intelligent lamp, an intelligent curtain, a clothes rack, and a clothes dryer; alternatively, the first device is a refrigerator, and the at least one second device includes at least one of: an intelligent lamp, an intelligent stove, an intelligent range hood, an intelligent oven, an intelligent microwave oven, and an intelligent dishwasher; alternatively, the first device is an air conditioner, and the at least one second device includes at least one of: an intelligent lamp, an intelligent desk lamp, an intelligent switch, and an intelligent curtain; alternatively, the first device is a water heater, and the at least one second device includes at least one of: an intelligent bathroom heater, an intelligent lamp, an intelligent ventilator, and an intelligent toilet lid.

In a possible implementation, the sensing information includes a light sensing signal, the first device is a washing machine, the at least one second device includes an intelligent lamp and/or an intelligent curtain, and the determining the first control instruction according to the sensing information includes:
determining the first control instruction according to the light sensing signal, where the first control instruction is used to instruct the intelligent lamp to be turned on or off and/or instruct the intelligent curtain to be opened or closed.

The embodiments of the present application enable the turning on or off of the intelligent light and/or the opening or closing of the intelligent curtain to be controlled based on the light sensing signal.

In a possible implementation, the determining the first control instruction according to the light sensing signal includes:
determining that the first control instruction is used to instruct the intelligent lamp to be turned off, when the light sensing signal is greater than a first preset threshold; and determining that the first control instruction is used to instruct the intelligent lamp to be turned on, when the light sensing signal is less than a second preset threshold;
and/or, determining that the first control instruction is used to instruct the intelligent curtain to be opened, when the light sensing signal is greater than a third preset threshold; and determining that the first control instruction is used to instruct the intelligent curtain to be closed, when the light sensing signal is less than a fourth preset threshold.

In a possible implementation, the first device is a washing machine, the at least one second device includes a clothes rack and/or a clothes dryer, the state information includes a washing state of the washing machine, and the determining the first control instruction according to the state information includes:
determining that the first control instruction is used to instruct the clothes dryer to start a drying procedure at a preset time, and/or determining that the first control instruction is used to instruct the clothes rack to be lowered to a preset height, when the washing state of the washing machine represents an ending of washing.

In a second aspect, the embodiments of the present application provide an edge computing device management method, this edge computing device management method is implemented by a second device, and the method includes:
receiving a first control instruction sent by a first device, where the first control instruction is generated by the first device according to sensing information and/or state information, the sensing information is sent by at least one sensor, the at least one sensor is connected with the first device, the state information represents a working state of the first device, and the first device is an edge computing node; and working according to the first control instruction, where the second device is an access node, and the first device is connected with at least one second device.

Optionally, the first device has at least one of the following gateway functions: a WiFi gateway function, a BLE gateway function, and a ZigBee gateway function.

The following describes the apparatus, device, system, computer-readable storage medium and computer program product provided by the embodiments of the application, and the contents and effects thereof may make reference to the edge computing device management method provided by the embodiments of the present application, which will not be repeated here.

In a third aspect, the embodiments of the present application provide an edge computing device management apparatus, including:
an acquisition module, configured to acquire original information, where the original information includes sensing information and/or state information, the sensing information is sent by at least one sensor, the at least one sensor is connected with a first device, the state information represents a working state of the first device, and the first device is an edge computing node;
a determination module, configured to determine a first control instruction according to the sensing information and/or state information; and
a first sending module, configured to send the first control instruction to a second device to make the second device work according to the first control instruction, where the second device is an access node, and the first device is connected with at least one second device.

Optionally, the first device has at least one of the following gateway functions: a WiFi gateway function, a BLE gateway function, and a ZigBee gateway function.

In a possible implementation, the edge computing device management apparatus further includes:
a first receiving module, configured to receive a second control instruction sent by a third device, where the second control instruction includes an identifier of a target second device, and the target second device is any one of the at least one second device; and
a second sending module, configured to send, according to the identifier of the target second device, the second control instruction to the target second device, to make the target second device work according to the second control instruction.

In one possible implementation, the first device is a washing machine, and the at least one second device includes at least one of: an intelligent lamp, an intelligent curtain, a clothes rack, and a clothes dryer; alternatively, the first device is a refrigerator, and the at least one second device includes at least one of: an intelligent lamp, an intelligent stove, an intelligent range hood, an intelligent oven, an intelligent microwave oven, and an intelligent dishwasher; alternatively, the first device is an air conditioner, and the at least one second device includes at least one of: an intelligent lamp, an intelligent desk lamp, an intelligent switch, and an intelligent curtain; alternatively, the first device is a water heater, and the at least one second device includes at least one of: an intelligent bathroom heater, an intelligent lamp, an intelligent ventilator, and an intelligent toilet lid.

In one possible implementation, the sensing information includes a light sensing signals, the first device is a washing machine, the at least one second device includes an intelligent lamp and/or an intelligent curtain, and the determination module is specifically configured to:
determine the first control instruction according to the light sensing signal, where the first control instruction is used to instruct the intelligent lamp to be turned on or off and/or instruct the intelligent curtain to be opened or closed.

In one possible implementation, the determination module is specifically configured to:
determine that the first control instruction is used to instruct the intelligent lamp to be turned off, when the light sensing signal is greater than a first preset threshold;
determine that the first control instruction is used to instruct the intelligent lamp to be turned on, when the light sensing signal is less than a second preset threshold;
   and/or,
determine that the first control instruction is used to instruct the intelligent curtain to be opened, when the light sensing signal is greater than a third preset threshold;
determine that the first control instruction is used to instruct the intelligent curtain to be closed, when the light sensing signal is less than a fourth preset threshold.

In one possible implementation, the first device is a washing machine, the at least one second device includes a clothes rack and/or a clothes dryer, the state information includes a washing state of the washing machine, and the determination module is specifically configured to:
determine that the first control instruction is used to instruct the clothes dryer to start a drying procedure at a preset time, and/or determine that the first control instruction is used to instruct the clothes rack to be lowered to a preset height, when the washing state of the washing machine represents an ending of washing.

In a fourth aspect, the embodiments of the present application provide an edge computing device management apparatus, the apparatus is implemented in a second device, and the apparatus includes:
a second receiving module, configured to receive a first control instruction sent by a first device, where the first control instruction is generated by the first device according to sensing information and/or state information, the sensing information is sent by at least one sensor, and the at least one sensor is connected with the first device; the state information represents a working state of the first device, and the first device is an edge computing node; and
a processing module, configured to work according to the first control instruction, where the second device is an access node, and the first device is connected with at least one second device.

Optionally, the first device has at least one of the following gateway functions: a WiFi gateway function, a BLE gateway function, and a ZigBee gateway function.

In a fifth aspect, the embodiments of the present application provide an electronic device, the electronic device including:
at least one processor; and
a memory communicating with the at least one processor, where
the memory stores instructions executable by the at least one processor, and the instructions are executed by the at least one processor to cause the at least one processor to perform the method provided in the first aspect or the method provided in the possible implementations of the first aspect, or the method provided in the second aspect or the method provided in the possible implementations of the second aspect.

In a sixth aspect, the embodiments of the present application provide a non-transitory computer-readable storage medium storing computer instructions, where the computer instructions are used to cause a computer to perform the method provided in the first aspect or the method provided in the possible implementations of the first aspect, or the method provided in the second aspect or the method provided in the possible implementations of the second aspect.

In a seventh aspect, the embodiments of the present application provides a computer program product including executable instructions, where the executable instructions are used to implement the method provided in the first aspect or the method provided in the possible implementations of the first aspect, or the method provided in the second aspect or the method provided in the possible implementations of the second aspect.

In an eighth aspect, the embodiments of the present application provide a system including:
a first device and at least one second device, where the first device is configured to: acquire original information, the original information includes sensing information and/or state information, the sensing information is sent by at least one sensor, the at least one sensor is connected with the first device, the state information represents a working state of the first device, and the first device is an edge computing node; determine a first control instruction according to the sensing information and/or the state information; and send the first control instruction to the second device. The at least one second device is configured to work according to the first control instruction, where each second device is an access node, and the first device is connected with the at least one the second device.

Optionally, the first device has at least one of the following gateway functions: a WiFi gateway function, a BLE gateway function, and a ZigBee gateway function.

In the edge computing device management method and apparatus, the device and the system provided by the embodiments of the present application, original information is acquired, where the original information includes sensing information and/or state information, the sensing information is sent by at least one sensor connected with a first device, the state information represents a working state of the first device, and the first device is an edge computing node. Then, a first control instruction is determined according to the sensing information and/or the state information. The first control instruction is sent to a second device to make the second device work according to the first control instruction. The second device is an access node, and the first device is connected with at least one second device. In the embodiments of this application, by making the first device serve as an edge computing node and making the at least one second device serve as access node(s) which may access the node network, the communication modes of multiple second devices can be unified, which avoids the installation of multiple types of gateway devices for matching different communication modes, and effectively saves the cost. Moreover, the first device determines the first control instruction according to the sensing information and/or the state information, so that the second device operates according to the first control instruction, enabling management of the second devices through the first device.

### BRIEF DESCRIPTION OF DRAWINGS

In order to more clearly explain the embodiments of the present application or the technical solutions in the prior art, the accompanying drawings that need to be used in the description of the embodiments or the prior art will be briefly introduced in the following. It is obvious that the accompanying drawings in the following description are some embodiments of the present application. For a person skilled in the art, other accompanying drawings can be obtained from these accompanying drawings without paying creative labor.
FIG. 1 is a diagram illustrating an exemplary application scenario provided by an embodiment of the present application.
FIG. 2 is a schematic interaction flowchart of the edge computing device management method provided by an embodiment of the present application.
FIG. 3 is a schematic flowchart of an edge computing device management method provided by another embodiment of the present application.
FIG. 4 is a diagram illustrating an exemplary application scenario provided by another embodiment of the present application.
FIG. 5 is a schematic structural diagram of an edge computing device management apparatus provided by an embodiment of the present application.
FIG. 6 is a schematic structural diagram of an edge computing device management apparatus provided by another embodiment of the present application.
FIG. 7 is a schematic structural diagram of an edge computing device management apparatus provided by yet another embodiment of the present application.
FIG. 8 is a schematic structural diagram of a system provided by an embodiment of the present application.
FIG. 9 is a schematic structural diagram of a device provided by an embodiment of the present application.

### DESCRIPTION OF EMBODIMENTS

In order to make the purposes, technical solutions and advantages of the embodiments of the present application clearer, the technical solutions in the embodiments of the present application will be described clearly and comprehensively below in combination with the accompanying drawings in the embodiments of the present application. Apparently, the described embodiments are part of the embodiments of the present application, not all of them. Based on the embodiments in the present application, all other embodiments obtained by a person of ordinary skill in the art without making creative work shall fall within the scope of protection of the present application.

The terms "first", "second", "third", "fourth", etc. (if any) in the description and claims of the present application and the above-mentioned accompanying drawings are used to distinguish similar objects, and do not necessarily describe a specific order or sequence. It should be understood that such data used in this manner can be interchanged in appropriate cases, so that the embodiments of the present application described here, for example, can be implemented in an order other than those illustrated or described herein. In addition, the terms "include" and "have" and any variations thereof are intended to cover non-exclusive inclusion. For example, a process, method, system, product or device that includes a series of steps or units does not need not be limited to those steps or units clearly listed, but may include other steps or units that are not clearly listed or that are inherent to the process, method, product or device. The phase "and/or" appearing in the embodiments of the present application includes three schemes, for example, "A and/or B" means "A" or "B", and "A and B".

With the development of network technology and with the advent of Internet of everything, more and more IOT devices are accessed at home. The IOT devices, the data information generated by the devices and the data linkage between the devices all need management and data processing. In the prior art, for the data communication between different types of IOT devices and the management of IOT devices, generally, many kinds of gateways are used for communicating data. Users need to install a variety of gateway devices for matching different communication methods, which is costly. In order to solve the above technical problem, the embodiments of the present application provide an edge computing device management method and apparatus, a device and a system.

In the edge computing device management method and apparatus, the device and the system provided by the embodiments of the present application, a first device serves as an edge computing node, at least one second device serves as an access node and accesses a node network formed by the first device, and data communication is performed between the at least one second device and the first device. In this way, the communication modes of multiple second devices are unified, the installation of multiple gateway devices for matching different communication modes is avoided, and the cost is effectively saved. Moreover, the first device obtains original information, which original information includes sensing information and/or state information, the sensing information is sent by at least one sensor connected with the first device. Then, the first device determines a first control instruction according to the sensing information and/or state information. The first control instruction is sent to the second device, to make the second device work according to the first control instruction, enabling management of the second device through the first device.

Below, an exemplary application scenario to which the embodiments of the present application are applied is introduced.

The edge computing device management method provided by the embodiments of the present application can be applied to household appliances. The first device may be a washing machine, refrigerator, television, etc., which is not limited by the embodiments of the present application. For different application scenarios, different household appliances may be selected as the first device. For example, in a balcony area, the first device may be a washing machine; in a living room area, the first device may be a television; and in a kitchen area, the first device may be a refrigerator, and so on. In the embodiments of the present application, the type and number of the second devices are not limited. In a possible implementation, for different application scenarios, different second devices may be selected to access the node network in which the first device serves as an edge computing node. For example, in the balcony area, the first device is a washing machine, and the second device may be a dryer, a clothes dryer, a clothes rack, a balcony lamp, a balcony curtain, etc.; for another example, in the living room area, the first device is a television, and the second device may be a vacuum cleaner, a sweeping robot, a living room lamp, a living room curtain, etc.; for yet another example, in the living room area, the first device is a refrigerator, and the second device may be a kitchen lamp, a range hood, etc. The embodiments of the present application only take these as examples and are not limited thereto.

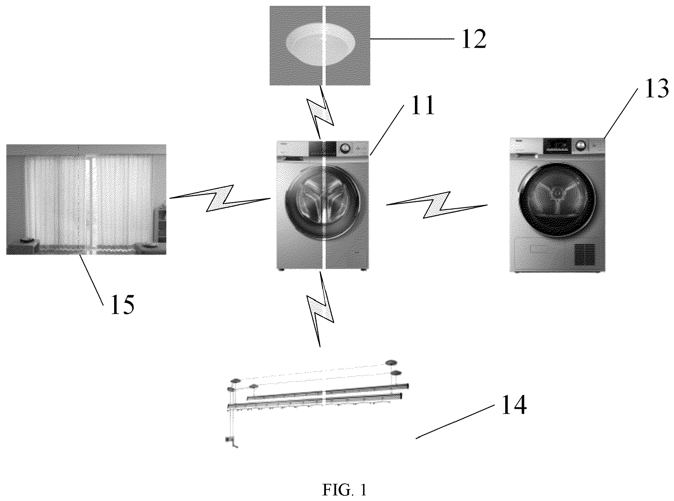

In a possible implementation, FIG. 1 illustrates an exemplary application scenario provided by the embodiments of the present application. As shown in FIG. 1, the first device is a washing machine 11, and the second devices include a balcony lamp 12, a clothes dryer 13, a clothes rack 14 and a balcony curtain 15. The balcony lamp 12, the clothes dryer 13, the clothes rack 14 and the balcony curtain 15 each perform data communication with the washing machine 11, to form an edge computing architecture, in which the balcony lamp 12, the clothes dryer 13, the clothes rack 14 and the balcony curtain 15 are controlled by the washing machine 11. The embodiments of the present application only take this as an example and are not limited to thereto.

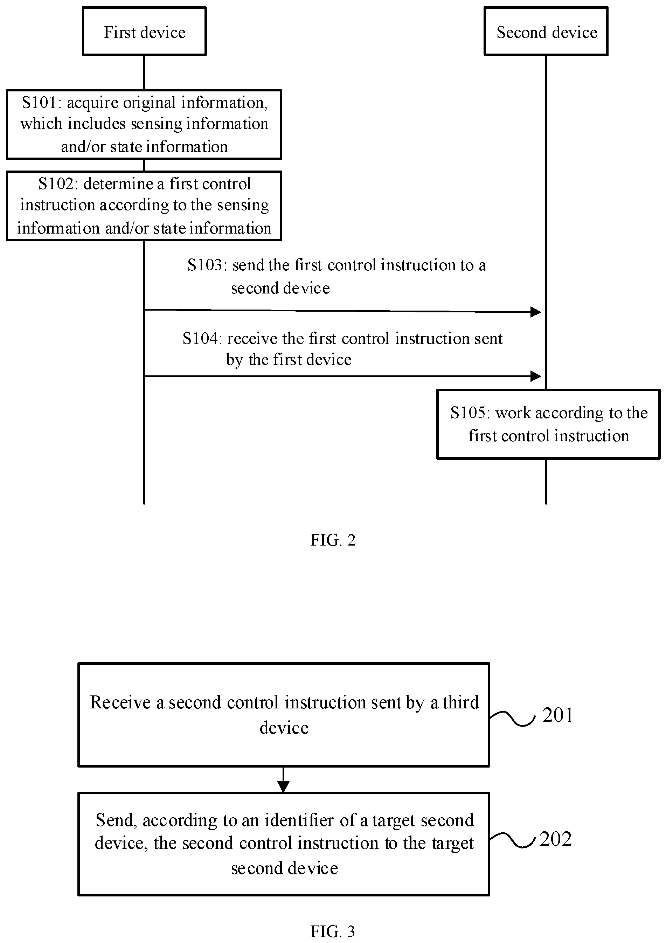

FIG. 2 is a schematic interaction flowchart of the edge computing device management method provided by an embodiment of the present application. The method may be executed by an edge computing device management apparatus, which may be realized in software and/or hardware. In the following, by taking the interaction between the first device and the second devices as an example, the edge computing device management method provided by the embodiments of the present application is illustrated. As shown in FIG. 2, the edge computing device management method provided by the embodiments of the present application may include steps as follows.

At step S101, original information is acquired by the first device, the original information includes sensing information and/or state information.

As an edge computing node, the first device may have at least one of the following gateway functions: a WiFi gateway function, a BLE gateway function, and a ZigBee gateway function. The first device is connected with at least one sensor. The sensor(s) may be arranged in the first device or the second device(s), or may be independent of the first device and the second device(s), which is not limited in the embodiments of the present application. The sensor(s) may be a temperature sensor, a photosensitive sensor, a pressure sensor, etc. The number and type of the sensor(s) are not limited in the embodiments of the present application, and may be set according to users' needs. The first device may acquire at least one kind of sensing information from the at least one sensor, and the sensing information may include temperature information, illumination information, pressure information, etc., which is not limited in the embodiments of the present application.

The state information represents a working state of the first device. The embodiments of the present application do not limit the specific device type of the first device. In a possible implementation, the first device is a washing machine, and the working state of the first device may include a non-washing state and a washing state, and the washing state may also include a start time of washing, a washing procedure, an end time of washing, etc. In another possible implementation, the first device is a television, and the working state of the first device may include an on state, an off state, a sleep state, etc. The embodiments of the present application only take these as examples.

The first device and the at least one second device may communicate with each other through Bluetooth, WiFi and other communication methods. The communication method between the first device and the second device(s) is not limited in the embodiments of the present application.

The embodiments of the present application do not limit the specific types of the first device and the second device(s). For example, the first device is a washing machine, and the second device(s) includes at least one of: an intelligent lamp, an intelligent curtain, a clothes rack and a clothes dryer; alternatively, the first device is a refrigerator, and the second device(s) includes at least one of: an intelligent lamp, an intelligent stove, an intelligent range hood, an intelligent oven, an intelligent microwave oven, and an intelligent dishwasher; alternatively, the first device is an air conditioner, and the second device(s) includes at least one of: an intelligent lamp, an intelligent desk lamp, an intelligent switch, and an intelligent curtain; alternatively, the first device is a water heater, and the second device includes at least one of: an intelligent bathroom heater, an intelligent lamp, an intelligent ventilator, and an intelligent toilet lid. The embodiments of the present application only take these as examples and are not limited thereto.

At step S102, the first device determines a first control instruction according to the sensing information and/or the state information.

After acquiring the sensing information sent by the sensor and/or the state information of the first device, the first device may determine the first control instruction according to the sensing information and/or the state information. The embodiments of the present application do not limit the specific implementation that the first device determines the first control instruction according to the sensing information and/or the state information. The first control instruction may include an identifier of the second device. For different second devices, different control conditions are required. The first device may acquire different sensing information for different second devices, and generate respective first control instruction(s) according to the sensing information and preset rules.

Taking the scenario of the balcony area as an example, the first device is a washing machine, and the second device(s) may include devices located on the balcony, such as a clothes dryer, an intelligent lamp installed at the balcony, an intelligent curtain installed at the balcony, and a clothes rack.

For example, the intelligent curtain needs to be closed at night and opened in the morning, thus the current ambient brightness may be determined by means of a photosensitive sensor, so that the opening or closing of the intelligent curtain may be controlled. For another example, the intelligent lamp needs to be turned on at night and turned off in the daytime, and the current ambient brightness may also be determined by means of the photosensitive sensor, so that the turning on or turning off of the intelligent lamp may be controlled. Based on this, in a possible implementation, the sensing information includes a light sensing signal, the second device(s) includes an intelligent lamp and/or an intelligent curtain, and the determining the first control instruction according to the sensing information includes: determining the first control instruction according to the light sensing signal, where the first control instruction is configured to instruct the intelligent lamp to be turned on or off and/or instruct the intelligent curtain to be opened or closed.

After acquiring the light sensing signal from the photosensitive sensor, the first device may determine the ambient brightness based on the magnitude of the light sensing signal, so as to realize intelligent control over the intelligent curtain and the intelligent lamp. In a possible implementation, the determining the first control instruction according to the light sensing signal includes:
determining that the first control instruction is used to instruct the intelligent lamp to be turned off, if the light sensing signal is greater than a first preset threshold; and determining that the first control instruction is used to instruct the intelligent lamp to be turned on, if the light sensing signal is less than a second preset threshold; and/or, determining that the first control instruction is used to instruct the intelligent curtain to be opened, if the light sensing signal is greater than a third preset threshold; and determining that the first control instruction is used to instruct the intelligent curtain to be closed, if the light sensing signal is less than a fourth preset threshold.

The light sensing signal may be used to represent the magnitude of light intensity. When the light sensing signal is greater than the first preset threshold, the first device generates the first control instruction to instruct the intelligent lamp to be turned off; and when the light sensing signal is less than the second preset threshold, the first device generates the first control instruction to instruct the intelligent lamp to be turned on, where the second preset threshold is less than the first preset threshold. Additionally/Alternatively, when the light sensing signal is greater than the third preset threshold, the first device generates the first control instruction to instruct the intelligent curtain to be opened; and when the light sensing signal is less than the fourth preset threshold, the first device generates the first control instruction to instruct the intelligent curtain to be closed, where the fourth preset threshold is less than the third preset threshold. The embodiments of the present application do not limit the specific values of the first preset threshold, the second preset threshold, the third preset threshold and the fourth preset threshold. In a possible implementation, the first preset threshold is equal to the third preset threshold, and in this case, if the light sensing signal is greater than the first preset threshold, the first device generates the first control instruction to instruct the intelligent lamp to be turned off, and also generates the first control instruction to instruct the intelligent curtain to be turned on.

In the embodiments of the present application, the instructions for controlling the intelligent lamp and/or the intelligent curtain are enabled to be generated based on the light sensing signal.

For another example, at the end of washing of the washing machine, the clothes dryer may need to be turned on to dry the washed clothes; alternatively, at the end of the washing procedure of the washing machine, the clothes rack needs to be lowered so that a user can hang the washed clothes on the clothes rack. Based on this, in a possible implementation, the second device(s) includes the clothes rack and/or the clothes dryer, the state information includes the washing states of the washing machine, and the determining the first control instruction according to the state information includes: if the washing state of the washing machine represents an ending of washing, determining that the first control instruction is used to instruct the clothes dryer to start a drying procedure at a preset time, and/or determining that the first control instruction is used to instruct the clothes rack to be lowered to a preset height.

When the washing state of the washing machine represents the ending of washing, it may generate the first control instruction to instruct the clothes dryer to start the drying procedure at the preset time, or it may generate the first control instruction to instruct the clothes rack to be lowered to the preset height. The embodiments of the present application do not limit the first control instruction that is generated by the washing machine based on the washing state. In a possible implementation, the state information of the washing machine may also include a washing mode. If the washing mode is a first preset mode, when the washing state represents the ending of washing, the washing machine generates the first control instruction to instruct the clothes dryer to start the drying procedure at the preset time; and if the washing mode is a second preset mode, when the washing state represents the ending of washing, the washing machine generates the first control instruction to instruct the clothes rack to be lowered to the preset height, where the first preset mode may be a woolen clothes washing mode, a mixed washing mode, etc., and the second preset mode may be a underwear washing mode, etc., which are only examples taken by the embodiments of the present application.

In the embodiments of the present application, the instructions for controlling the clothes dryer and/or the clothes rack are enabled to be generated according to the washing states of the washing machine.

In yet another possible implementation, the first device may also determine the first control instruction based on a variety of sensing information. Taking a case where the first device is a washing machine and the second device is an intelligent lamp as an example, the sensing information may include a light sensor signal and an infrared sensor signal. Based on the light sensor signal and the infrared sensor signal, the intelligent lamp may be controlled to be turned off when people leaves. In another possible implementation, the first device may also generate the first control instruction according to the sensing information and state information, and the embodiments of the present application are not limited thereto.

At step S103, the first device sends the first control instruction to the second device.

The first device sends the first control instruction to the second device, to make the second device work according to the first control instruction. The first control instruction may include the identifier of the second device. For example, the first control instruction may include a code, a device number and other information of the second device, and the first control instruction may be sent, based on the identifier of the second device, to the second device.

At step S104, the second device receives the first control instruction sent by the first device.

The first control instruction is the control instruction generated by the first device according to the sensing information and/or the state information. The sensing information is sent by the at least one sensor which is connected with the first device, the state information represents the working state of the first device, and the first device is an edge computing node.

At step S105, the second device works according to the first control instruction.

After receiving the first control instruction sent from the first device, the second device works according to the first control instruction. For example, when the second device is an intelligent lamp and the first control instruction is used to instruct the intelligent lamp to be turned off, the intelligent lamp executes a turn-off operation upon receiving the first control instruction. The embodiments of the present application only take this as an example and are not limited thereto.

In the embodiments of the present application, by making the first device serve as an edge computing node and making the at least one second device serve as the access node which may access the node network, the communication modes of multiple second devices can be unified, which avoids the installation of multiple types of gateway devices for matching different communication modes, and effectively saves the cost. Moreover, the first device determines the first control instruction according to the sensing information and/or the state information, so that the second device(s) works according to the first control instruction, thereby enabling the management of the second device through the first device. In addition, by making the first device serve as an edge computing node and making the second device accessing the network node, by means of the gateway function of the first device, the signal strength of the second device can also be enhanced.

In order to realize remote control of home intelligent devices for the user, in a possible implementation, the edge computing device management method provided by the embodiments of the present application may also include a third device. The third device may be a terminal device, such as a smart phone, a tablet computer, a wearable device, a vehicle terminal, etc. The embodiments of the present application do not limit the type of the third device.

Based on this, in a possible implementation, FIG. 3 is a schematic flowchart of an edge computing device management method provided by another embodiment of the present application. The method may be executed by an edge computing device management apparatus, which may be realized in software and/or hardware. In the following, the edge computing device management method provided by the embodiments of the present application is illustrated below with the first device as an execution body. As shown in FIG. 3, the edge computing device management method provided by the embodiments of the present application may further include steps as follows.

At step S201, a second control instruction sent by a third device is received.

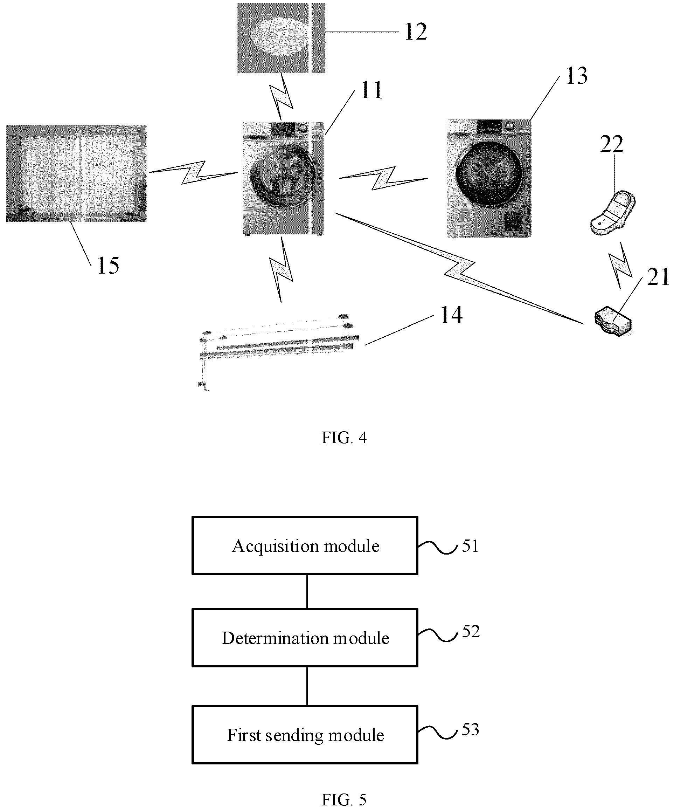

FIG. 4 illustrates a diagram of an exemplary application scenario provided by another embodiment of the present application. As shown in FIG. 4, on the basis of FIG. 1 and on the premise of connecting to an external network, the first device serves as a network node and communicates with a router 21; in this way, the states of the second devices within the node network may be synchronized to the cloud, and a third device 22 may issue the second control instruction through a cloud platform.

The first device receives the second control instruction sent by the third device. The second control instruction includes the identifier of a target second device. The target second device is any of the at least one second device. The embodiments of the present application do not limit the specific operation of the second control instruction.

Optionally, the third device may also view the states of the second devices through the cloud platform. The embodiments of the present application do not limit the functions, control permissions and control methods of the third device. In a possible implementation, the third device may be realized through an application (Application, APP).

At step S202, the second control instruction is sent to the target second device according to the identifier of the target second device.

According to the identifier of the target second device, the first device sends the second control instruction to the target second device through the node network. After receiving the second control instruction, the target second device works according to the second control instruction. This step is similar to step S103 and will not be repeated here.

In the embodiments of the present application, the first device may also receive the control instruction sent by the third device, and thus the third device is enabled to manage and control the second device. The third device may be a terminal device, and the third device communicates with the first device through a cloud server. The embodiments of the present application are not limited thereto.

In the following, apparatus embodiments provided by the present application are illustrated, which may be used to implement the method embodiments of the present application. For details not disclosed in the apparatus embodiments of the present application, reference may be made to the method embodiments of the present application.

FIG. 5 is a schematic structural diagram of an edge computing device management apparatus according to an embodiment of the present application. As shown in FIG. 5, the edge computing device management apparatus provided by the embodiments of the present application may include:
an acquisition module 51, configured to acquire original information, where the original information includes sensing information and/or state information, the sensing information is sent by at least one sensor connected with a first device, the state information represents a working state of the first device, and the first device is an edge computing node;
a determination module 52, configured to determine a first control instruction according to the sensing information and/or state information; and
a first sending module 53, configured to send the first control instruction to a second device, to make the second device operate according to the first control instruction, where the second device is an access node, and the first device is connected with at least one second device.

Optionally, the first device has at least one of the following gateway functions: a WiFi gateway function, a BLE gateway function, and a ZigBee gateway function.

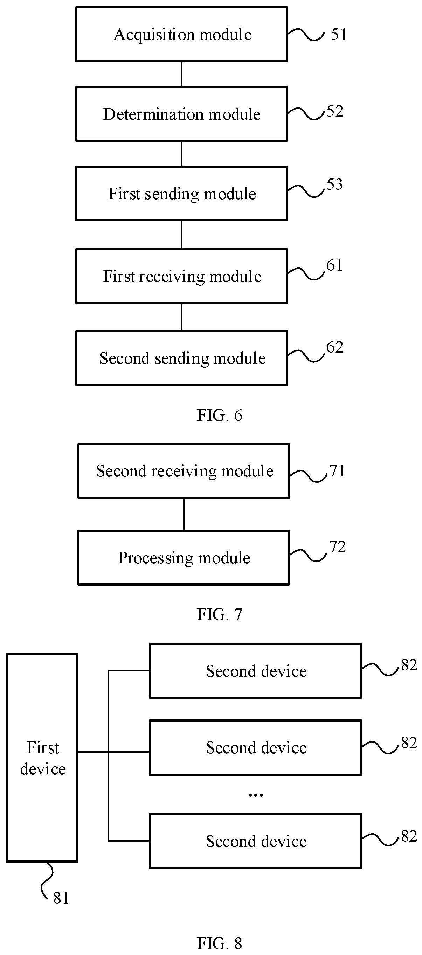

In a possible implementation, FIG. 6 illustrates a schematic structural diagram of an edge computing device management apparatus provided by another embodiment of the present application. As shown in FIG. 6, the edge computing device management apparatus provided by the embodiments of the present application may also include:
a first receiving module 61, configured to receive a second control instruction sent by a third device, where the second control instruction includes an identifier of a target second device, and the target second device is any one of the at least one second device; and
a second sending module 62, configured to send, according to the identifier of the target second device, the second control instruction to the target second device, to make the target second device work according to the second control instruction.

In one possible implementation, the first device is a washing machine, and the second device(s) includes at least one of: an intelligent lamp, an intelligent curtain, a clothes rack, and a clothes dryer; alternatively, the first device is a refrigerator, and the second device(s) includes at least one of: an intelligent lamp, an intelligent stove, an intelligent range hood, an intelligent oven, an intelligent microwave oven, and an intelligent dishwasher; alternatively, the first device is an air conditioner, and the second device(s) includes at least one of: an intelligent lamp, an intelligent desk lamp, an intelligent switch, and an intelligent curtain; alternatively, the first device is a water heater, and the second device(s) includes at least one of: an intelligent bathroom heater, an intelligent lamp, an intelligent ventilator, and an intelligent toilet lid.

In one possible implementation, the sensing information includes a light sensing signal, the first device is a washing machine, the second device(s) includes an intelligent lamp and/or an intelligent curtain, and the determination module 52 is specifically configured to:
determine the first control instruction according to the light sensing signal, where the first control instruction is configured to instruct the intelligent lamp to be turned on or off and/or instruct the intelligent curtain to be open or closed.

In one possible implementation, the determination module 52 is specifically configured to:
determine that the first control instruction is used to instruct the intelligent lamp to be turned off, if the light sensing signal is greater than a first preset threshold, and determine that the first control instruction is used to instruct the intelligent lamp to be turned on, if the light sensing signal is less than a second preset threshold; and/or, determine that the first control instruction is used to instruct the intelligent curtain to be opened, if the light sensing signal is greater than a third preset threshold, and determine that the first control instruction is used to instruct the intelligent curtain to be closed, if the light sensing signal is less than a fourth preset threshold.

In one possible implementation, the second device(s) includes a clothes rack and/or a clothes dryer, the state information includes a washing state of the washing machine, and the determine module 52 is specifically configured to:
determine that the first control instruction is used to instruct the clothes dryer to start a drying procedure at a preset time, and/or determine that the first control instruction is used to instruct the clothes rack to be lowered to a preset height, if the washing state of the washing machine represents the ending of washing.

FIG. 7 is a schematic structural diagram of an edge computing device management apparatus provided by yet another embodiment of the present application. As shown in FIG. 7, the edge computing device management apparatus provided by the embodiments of the application may include:
a second receiving module 71, configured to receive a first control instruction sent by a first device, where first control instruction is generated by the first device according to sensing information and/or state information, the sensing information is sent by at least one sensor connected with the first device, the state information represents a working state of the first device, and the first device is an edge computing node; and
a processing module 72, configured to operate according to the first control instruction, where a second device is an access node, and the first device is connected with at least one second device.

The apparatus embodiments provided in the present application are only exemplary, and the module division in FIGs. 5 to 7 is only performed in terms of logical function, which may also be performed in other ways in practice. For example, multiple modules may be combined or integrated into another system. The coupling between various modules may be realized through some interfaces, which interfaces are usually electrical communication interfaces, but they may also be mechanical interfaces or other types of interfaces. Therefore, the modules described as separate parts may be or may not be physically separated, and may be located in one place or distributed to different positions of the same or different devices.

FIG. 8 is a schematic structural diagram illustrating a system provided by the embodiments of the present application. As shown in FIG. 8, the system provided by the embodiments of the present application includes a first device 81 and at least one second device 82.

The first device 81 acquires original information, and the original information includes sensing information and/or state information. The sensing information is sent by at least one sensor connected with the first device 81, and the state information represents a working state of the first device 81. The first device 81 is an edge computing node, where the first device may have at least one of the following gateway functions: a WiFi gateway function, a BLE gateway function, and a ZigBee gateway function. The first device determines a first control instruction according to the sensing information and/or the state information. The first device sends the first control instruction to the second device 82. The second device 82 works according to the first control instruction, where the second device 82 is an access node, and the first device 81 is connected with the at least one second device 82.

For the contents and effects of the system provided by the embodiments of the present application, reference may be made to the contents and effects of the embodiments of the edge computing device management method provided by the embodiments of the present application, which will not be repeated here.

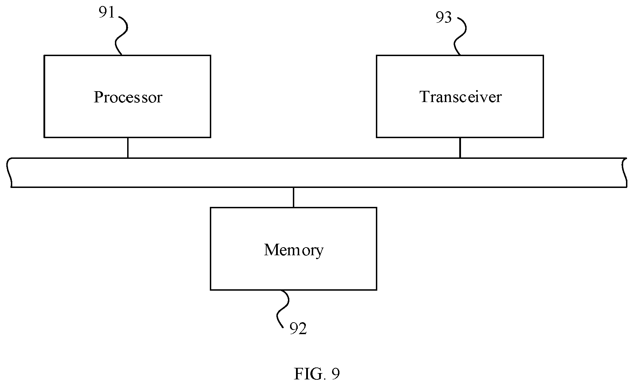

FIG. 9 is a schematic structural diagram of a device provided by the embodiments of the present application. As shown in FIG. 9, the device includes:
a processor 91, a memory 92, a transceiver 93, and a computer program, where the transceiver 93 enables data transmission with other devices, and the computer program is stored in the memory 92 and configured to be executed by the processor 91. The computer program includes instructions for executing the above edge computing device management method, and the contents and effects of which may make reference to the method embodiments.

In addition, the embodiments of the present application also provide a computer-readable storage medium, in which computer executable instructions are stored. When at least one processor of a user's device executes the computer executable instructions, the user's device executes the above various possible methods.

The computer-readable medium includes a computer storage medium and a communication medium, where the communication medium includes any medium that facilitates the transmission of computer programs from one place to another. The storage medium may be any available medium that can be accessed by a general-purpose or special-purpose computer. An exemplary storage medium is coupled to the processor so that the processor may read information from and write information to the storage medium. Of course, the storage medium may also be an integral part of the processor. The processor and storage medium may be located in an ASIC. In addition, the ASIC may be located in a user's device. Of course, the processor and the storage medium may also exist in a communication device as discrete components.

A person skilled in the art can understand that all or part of the steps for implementing the above method embodiments may be executed by hardware related to program instructions. The aforementioned program may be stored in a computer readable storage medium, and when the program is executed, the steps of the above method embodiments are executed. The aforementioned storage media include ROM, RAM, magnetic disc or optical disc and other media that can store program codes.

Finally, it should be noted that the above embodiments are only used to illustrate the technical solutions of the present application, but do not limit the application.

## Claims

1. An edge computing device management method, comprising:
acquiring (S101) original information, wherein the original information comprises sensing information and/or state information, the sensing information is sent by at least one sensor, the at least one sensor is connected with a first device, the state information represents a working state of the first device, and the first device is an edge computing node;
determining (S102) a first control instruction, according to the sensing information and/or the state information; and
sending (S103) the first control instruction to a second device, to make the second device work according to the first control instruction, wherein the second device is an access node, and the first device is connected with at least one second device;
**characterized by** further comprising:
receiving (S104) a second control instruction sent by a third device, wherein the second control instruction comprises an identifier of a target second device, and the target second device is any one of the at least one second device; and
sending (S105), according to the identifier of the target second device, the second control instruction to the target second device, to make the target second device work according to the second control instruction.

2. The method according to claim 1, wherein the sensing information comprises a light sensor signal and an infrared sensor signal, the at least one second device comprises an intelligent lamp, and the determining the first control instruction according to the sensing information comprises:
determining, according to the light sensor signal and the infrared sensor signal, the first control instruction to instruct the intelligent lamp to be turned off when people leaves.

3. The method according to claim 1, wherein
the first device is a washing machine, and the at least one second device comprises at least one of: an intelligent lamp, an intelligent curtain, a clothes rack, and a clothes dryer;
or,
the first device is a refrigerator, and the at least one second device comprises at least one of: an intelligent lamp, an intelligent stove, an intelligent range hood, an intelligent oven, an intelligent microwave oven, and an intelligent dishwasher;
or,
the first device is an air conditioner, and the at least one second device comprises at least one of: an intelligent lamp, an intelligent desk lamp, an intelligent switch, and an intelligent curtain;
or,
the first device is a water heater, and the at least one second device comprises at least one of: an intelligent bathroom heater, an intelligent lamp, an intelligent ventilator, and an intelligent toilet lid.

4. The method according to claim 3, wherein the sensing information comprises a light sensing signal, the first device is a washing machine, the at least one second device comprises an intelligent lamp and/or an intelligent curtain, and the determining the first control instruction according to the sensing information comprises:
determining the first control instruction according to the light sensing signal, wherein the first control instruction is configured to instruct the intelligent lamp to be turned on or off and/or instruct the intelligent curtain to be opened or closed.

5. The method according to claim 4, wherein the determining the first control instruction according to the light sensing signal comprises:
determining that the first control instruction is configured to instruct the intelligent lamp to be turned off, when the light sensing signal is greater than a first preset threshold; and
determining that the first control instruction is configured to instruct the intelligent lamp to be turned on, when the light sensing signal is less than a second preset threshold;
and/or,
determining that the first control instruction is configured to instruct the intelligent curtain to be opened, when the light sensing signal is greater than a third preset threshold; and
determining that the first control instruction is configured to instruct the intelligent curtain to be closed, when the light sensing signal is less than a fourth preset threshold.

6. The method according to claim 5, wherein the second preset threshold is less than the first preset threshold, and the fourth preset threshold is less than the third preset threshold; preferably, the first preset threshold is equal to the third preset threshold.

7. The method according to claim 3, wherein the first device is a washing machine, the at least one second device comprises a clothes rack and/or a clothes dryer, the state information comprises a washing state of the washing machine, and the determining the first control instruction according to the state information comprises:
determining that the first control instruction is configured to instruct the clothes dryer to start a drying procedure at a preset time, and/or determining that the first control instruction is configured to instruct the clothes rack to be lowered to a preset height, when the washing state of the washing machine represents an ending of washing.

8. The method according to claim 7, wherein the state information of the washing machine comprises a washing mode, the determining that the first control instruction is configured to instruct the clothes dryer to start a drying procedure at a preset time, and/or determining that the first control instruction is configured to instruct the clothes rack to be lowered to a preset height, when the washing state of the washing machine represents an ending of washing, comprises:
determining that the first control instruction is configured to instruct the clothes dryer to start the drying procedure at the preset time, when the washing state of the washing machine represents the ending of washing and the washing mode is a first preset mode; or
determining that the first control instruction is configured to instruct the clothes rack to be lowered to the preset height, when the washing state of the washing machine represents the ending of washing and the washing mode is a second preset mode different from the first preset mode.

9. The method according to any one of claims 1-8, further comprising: arranging the at least one sensor in the first device or the at least one second device.

10. The method according to any one of claims 1-8, further comprising: arranging the at least one sensor independent of the first device or the at least one second device.

11. The method according to any one of claims 1-10, further comprising: configuring the first device to have at least one of a WiFi gateway function, a Bluetooth Low Energy gateway function, and a ZigBee gateway function.

12. A device, comprising:
at least one processor (91); and
a memory (92) communicating with the at least one processor (91); wherein
the memory (92) stores instructions executable by the at least one processor (91), and the instructions are executed by the at least one processor (91) to cause the at least one processor (91) to implement the method according to any one of claims 1-11.

13. A system, comprising a first device (81) and at least one second device (82), wherein the first device (81) is the device according to claim 12.

## Patentansprüche

1. Edge-Rechenvorrichtung-Verwaltungsverfahren, umfassend:
Erfassen (S101) von ursprünglichen Informationen, wobei die ursprünglichen Informationen Abtastinformationen und/oder Zustandsinformationen umfassen, die Abtastinformationen von mindestens einem Sensor gesendet werden, der mindestens eine Sensor mit einer ersten Vorrichtung verbunden ist, die Zustandsinformationen einen Arbeitszustand der ersten Vorrichtung darstellen und die erste Vorrichtung ein Edge-Rechenknoten ist;
Bestimmen (S102) einer ersten Steueranweisung gemäß den Abtastinformationen und/oder den Zustandsinformationen; und
Senden (S103) der ersten Steueranweisung an eine zweite Vorrichtung, damit die zweite Vorrichtung gemäß der ersten Steueranweisung betrieben wird, wobei die zweite Vorrichtung ein Zugangsknoten ist, und die erste Vorrichtung mit mindestens einer zweiten Vorrichtung verbunden ist;
**dadurch gekennzeichnet, dass** es ferner Folgendes umfasst:
Empfangen (S104) einer zweiten Steueranweisung, die von einer dritten Vorrichtung gesendet wird, wobei die zweite Steueranweisung eine Kennung einer zweiten Zielvorrichtung umfasst, und die zweite Zielvorrichtung eine beliebige der mindestens einen zweiten Vorrichtung ist; und
Senden (S105), gemäß der Kennung der zweiten Zielvorrichtung, der zweiten Steueranweisung an die zweite Zielvorrichtung, damit die zweite Zielvorrichtung gemäß der zweiten Steueranweisung betrieben wird.

2. Verfahren nach Anspruch 1, wobei die Abtastinformationen ein Lichtsensorsignal und ein Infrarotsensorsignal umfassen, die mindestens eine zweite Vorrichtung eine intelligente Lampe umfasst, und das Bestimmen der ersten Steueranweisung gemäß den Abtastinformationen Folgendes umfasst:
Bestimmen, gemäß dem Lichtsensorsignal und dem Infrarotsensorsignal, der ersten Steueranweisung, um die intelligente Lampe anzuweisen, auszuschalten, wenn Personen weggehen.

3. Verfahren nach Anspruch 1, wobei
die erste Vorrichtung eine Waschmaschine ist, und die mindestens eine zweite Vorrichtung mindestens eines von Folgenden umfasst: eine intelligente Lampe, einen intelligenten Vorhang, einen Wäscheständer und einen Wäschetrockner; oder
die erste Vorrichtung ein Kühlschrank ist, und die mindestens eine zweite Vorrichtung mindestens eines von Folgenden umfasst:
eine intelligente Lampe, einen intelligenten Herd, eine intelligente Dunstabzugshaube, einen intelligenten Ofen, eine intelligente Mikrowelle und einen intelligenten Geschirrspüler; oder
die erste Vorrichtung eine Klimaanlage ist, und die mindestens eine zweite Vorrichtung mindestens eines von Folgenden umfasst: eine intelligente Lampe, eine intelligente Schreibtischlampe, einen intelligenten Schalter und einen intelligenten Vorhang; oder
die erste Vorrichtung ein Wassererhitzer ist, und die mindestens eine zweite Vorrichtung mindestens eines von Folgenden umfasst:
eine intelligente Badezimmerheizung, eine intelligente Lampe, einen intelligenten Ventilator und einen intelligenten Toilettendeckel.

4. Verfahren nach Anspruch 3, wobei die Abtastinformationen ein Lichtabtastsignal umfassen, die erste Vorrichtung eine Waschmaschine ist, die mindestens eine zweite Vorrichtung eine intelligente Lampe und/oder einen intelligenten Vorhang umfasst, und das Bestimmen der ersten Steueranweisung gemäß den Abtastinformationen Folgendes umfasst:
Bestimmen der ersten Steueranweisung gemäß dem Lichtabtastsignal, wobei die erste Steueranweisung konfiguriert ist, um ein Ein- oder Ausschalten der intelligenten Lampe und/oder ein Öffnen oder Schließen des intelligenten Vorhangs anzuweisen.

5. Verfahren nach Anspruch 4, wobei das Bestimmen der ersten Steueranweisung gemäß dem Lichtabtastsignal Folgendes umfasst:
Bestimmen, dass die erste Steueranweisung konfiguriert ist, um das Ausschalten der intelligenten Lampe anzuweisen, wenn das Lichtabtastsignal größer ist als ein erster voreingestellter Schwellenwert; und
Bestimmen, dass die erste Steueranweisung konfiguriert ist, um das Einschalten der intelligenten Lampe anzuweisen, wenn das Lichtabtastsignal kleiner ist als ein zweiter voreingestellter Schwellenwert; und/oder
Bestimmen, dass die erste Steueranweisung konfiguriert ist, um das Öffnen des Vorhangs anzuweisen, wenn das Lichtabtastsignal größer ist als ein dritter voreingestellter Schwellenwert; und
Bestimmen, dass die erste Steueranweisung konfiguriert ist, um das Schließen des Vorhangs anzuweisen, wenn das Lichtabtastsignal kleiner ist als ein vierter voreingestellter Schwellenwert.

6. Verfahren nach Anspruch 5, wobei der zweite voreingestellte Schwellenwert kleiner ist als der erste voreingestellte Schwellenwert und der vierte voreingestellte Schwellenwert kleiner ist als der dritte voreingestellte Schwellenwert; vorzugsweise der erste voreingestellte Schwellenwert gleich wie der dritte voreingestellte Schwellenwert ist.

7. Verfahren nach Anspruch 3, wobei die erste Vorrichtung eine Waschmaschine ist, die mindestens eine zweite Vorrichtung einen Wäscheständer und/oder einen Wäschetrockner umfasst, die Zustandsinformationen einen Waschzustand der Waschmaschine umfassen, und das Bestimmen der ersten Steueranweisung gemäß den Zustandsinformation Folgendes umfasst:
Bestimmen, dass die erste Steueranweisung konfiguriert ist, um den Wäschetrockner anzuweisen, einen Trocknungsvorgang zu einer voreingestellten Zeit zu beginnen, und/oder Bestimmen, dass die erste Steueranweisung konfiguriert ist, um ein Absenken des Wäscheständers auf eine voreingestellte Höhe anzuweisen, wenn der Waschzustand der Waschmaschine ein Ende des Waschens darstellt.

8. Verfahren nach Anspruch 7, wobei die Zustandsinformationen der Waschmaschine einen Waschmodus umfassen, das Bestimmen, dass die erste Steueranweisung konfiguriert ist, um den Wäschetrockner anzuweisen, einen Trocknungsvorgang zu einer voreingestellten Zeit zu beginnen, und/oder Bestimmen, dass die erste Steueranweisung konfiguriert ist, um ein Absenken des Wäscheständers auf eine voreingestellte Höhe anzuweisen, wenn der Waschzustand der Waschmaschine ein Ende des Waschens darstellt, Folgendes umfasst:
Bestimmen, dass die erste Steueranweisung konfiguriert ist, um den Wäschetrockner anzuweisen, den Trocknungsvorgang zu der voreingestellten Zeit zu beginnen, wenn der Waschzustand der Waschmaschine das Ende des Waschens darstellt und der Waschmodus ein erster voreingestellter Modus ist; oder
Bestimmen, dass die erste Steueranweisung konfiguriert ist, um ein Absenken des Wäscheständers auf die voreingestellte Höhe anzuweisen, wenn der Waschzustand der Waschmaschine das Ende des Waschens darstellt und der Waschmodus ein zweiter voreingestellter Modus ist, der sich von dem ersten voreingestellten Modus unterscheidet.

9. Verfahren nach einem der Ansprüche 1-8, ferner umfassend: Anordnen des mindestens einen Sensors in der ersten oder der mindestens einen zweiten Vorrichtung.

10. Verfahren nach einem der Ansprüche 1-8, ferner umfassend: Anordnen des mindestens einen Sensors unabhängig von der ersten Vorrichtung oder der mindestens einen zweiten Vorrichtung.

11. Verfahren nach einem der Ansprüche 1-10, ferner umfassend: Konfigurieren der ersten Vorrichtung, um mindestens eine WiFi-Gateway-Funktion, eine Bluetooth Low Energy-Gateway-Funktion oder eine ZigBee-Gateway-Funktion aufzuweisen.

12. Vorrichtung, umfassend:
mindestens einen Prozessor (91); und
einen Speicher (92), der mit dem mindestens einen Prozessor (91) kommuniziert, wobei
der Speicher (92) Anweisungen speichert, die von dem mindestens einen Prozessor (91) ausführbar sind, und die Anweisungen von dem mindestens einen Prozessor (91) ausgeführt werden, um den mindestens einen Prozessor (91) zu veranlassen, das Verfahren nach einem der Ansprüche 1-11 zu implementieren.

13. System, umfassend eine erste Vorrichtung (81) und mindestens eine zweite Vorrichtung (82), wobei die erste Vorrichtung (81) die Vorrichtung nach Anspruch 12 ist.

## Revendications

1. Procédé de gestion d'un dispositif d'informatique en périphérie, comprenant le fait de :
acquérir (S101) des informations d'origine, dans lequel les informations d'origine comprennent des informations de détection et/ou des informations d'état, les informations de détection sont envoyées par au moins un capteur, l'au moins un capteur est connecté à un premier dispositif, les informations d'état représentent un état de fonctionnement du premier dispositif, et le premier dispositif est un nœud d'informatique en périphérie ;
déterminer (S102) une première instruction de commande, en fonction des informations de détection et/ou des informations d'état ; et
envoyer (S103) la première instruction de commande à un deuxième dispositif, afin de faire fonctionner le deuxième dispositif conformément à la première instruction de commande, dans lequel le deuxième dispositif est un nœud d'accès, et le premier dispositif est connecté à au moins un deuxième dispositif ;
**caractérisé en ce qu'**il comprend en outre le fait de :
recevoir (S104) une deuxième instruction de commande envoyée par un troisième dispositif, dans lequel la deuxième instruction de commande comprend un identifiant d'un deuxième dispositif cible, et le deuxième dispositif cible est l'un quelconque parmi l'au moins un deuxième dispositif ; et
envoyer (S105), en fonction de l'identifiant du deuxième dispositif cible, la deuxième instruction de commande au deuxième dispositif cible, afin de faire fonctionner le deuxième dispositif cible conformément à la deuxième instruction de commande.

2. Procédé selon la revendication 1, dans lequel les informations de détection comprennent un signal de capteur de lumière et un signal de capteur infrarouge, l'au moins un deuxième dispositif comprend une lampe intelligente, et la détermination de la première instruction de commande en fonction des informations de détection comprend le fait de :
déterminer, en fonction du signal de capteur de lumière et du signal de capteur infrarouge, la première instruction de commande pour ordonner à la lampe intelligente de s'éteindre lorsque les personnes s'en vont.

3. Procédé selon la revendication 1, dans lequel
le premier dispositif est une machine à laver, et l'au moins un deuxième dispositif comprend au moins l'un des éléments parmi : une lampe intelligente, un rideau intelligent, un étendoir à linge et un sèche-linge ; ou
le premier dispositif est un réfrigérateur, et l'au moins un deuxième dispositif comprend au moins l'un des éléments parmi : une lampe intelligente, une cuisinière intelligente, une hotte aspirante intelligente, un four intelligent, un four à micro-ondes intelligent et un lave-vaisselle intelligent ; ou
le premier dispositif est un climatiseur, et l'au moins un deuxième dispositif comprend au moins l'un des éléments parmi : une lampe intelligente, une lampe de bureau intelligente, un interrupteur intelligent et un rideau intelligent ; ou,
le premier dispositif est un chauffe-eau, et l'au moins un deuxième dispositif comprend au moins l'un des éléments parmi : un radiateur de salle de bain intelligent, une lampe intelligente, un dispositif de ventilation intelligent et un couvercle de toilettes intelligent.

4. Procédé selon la revendication 3, dans lequel les informations de détection comprennent un signal de détection de lumière, le premier dispositif est une machine à laver, l'au moins un deuxième dispositif comprend une lampe intelligente et/ou un rideau intelligent, et la détermination de la première instruction de commande en fonction des informations de détection comprend le fait de :
déterminer la première instruction de commande en fonction du signal de détection de lumière, dans laquelle la première instruction de commande est configurée pour ordonner à la lampe intelligente de s'allumer ou de s'éteindre et/ou ordonner au rideau intelligent de s'ouvrir ou de se fermer.

5. Procédé selon la revendication 4, dans lequel la détermination de la première instruction de commande en fonction du signal de détection de lumière comprend le fait de :
déterminer que la première instruction de commande est configurée pour ordonner à la lampe intelligente de s'éteindre, lorsque le signal de détection de lumière est supérieur à un premier seuil prédéfini ; et
déterminer que la première instruction de commande est configurée pour ordonner à la lampe intelligente de s'allumer, lorsque le signal de détection de lumière est inférieur à un deuxième seuil prédéfini ; et/ou,
déterminer que la première instruction de commande est configurée pour ordonner au rideau intelligent de s'ouvrir, lorsque le signal de détection de lumière est supérieur à un troisième seuil prédéfini ; et
déterminer que la première instruction de commande est configurée pour ordonner au rideau intelligent de se fermer, lorsque le signal de détection de lumière est inférieur à un quatrième seuil prédéfini.

6. Procédé selon la revendication 5, dans lequel le deuxième seuil prédéfini est inférieur au premier seuil prédéfini, et le quatrième seuil prédéfini est inférieur au troisième seuil prédéfini ; et, de préférence, le premier seuil prédéfini est égal au troisième seuil prédéfini.

7. Procédé selon la revendication 3, dans lequel le premier dispositif est une machine à laver, l'au moins un deuxième dispositif comprend un étendoir à linge et/ou un sèche-linge, les informations d'état comprennent un état de lavage de la machine à laver, et la détermination de la première instruction de commande en fonction des informations d'état comprend le fait de :
déterminer que la première instruction de commande est configurée pour ordonner au sèche-linge de démarrer une procédure de séchage à une heure prédéfinie, et/ou déterminer que la première instruction de commande est configurée pour ordonner à l'étendoir à linge de s'abaisser à une hauteur prédéfinie, lorsque l'état de lavage de la machine à laver représente la fin du lavage.

8. Procédé selon la revendication 7, dans lequel les informations d'état de la machine à laver comprennent un mode de lavage, et la détermination que la première instruction de commande est configurée pour ordonner au sèche-linge de démarrer une procédure de séchage à une heure prédéfinie, et/ou la détermination que la première instruction de commande est configurée pour ordonner à l'étendoir à linge de s'abaisser à une hauteur prédéfinie, lorsque l'état de lavage de la machine à laver représente la fin du lavage, comprend/comprennent le fait de :
déterminer que la première instruction de commande est configurée pour ordonner au sèche-linge de démarrer la procédure de séchage à l'heure prédéfinie, lorsque l'état de lavage de la machine à laver représente la fin du lavage et que le mode de lavage est un premier mode prédéfini ; ou
déterminer que la première instruction de commande est configurée pour ordonner à l'étendoir à linge de s'abaisser à la hauteur prédéfinie, lorsque l'état de lavage de la machine à laver représente la fin du lavage et que le mode de lavage est un deuxième mode prédéfini, différent du premier mode prédéfini.

9. Procédé selon l'une quelconque des revendications 1 à 8, comprenant en outre le fait de : agencer l'au moins un capteur dans le premier dispositif ou dans l'au moins un deuxième dispositif.

10. Procédé selon l'une quelconque des revendications 1 à 8, comprenant en outre le fait de : agencer l'au moins un capteur indépendamment du premier dispositif ou de l'au moins un deuxième dispositif.

11. Procédé selon l'une quelconque des revendications 1 à 10, comprenant en outre le fait de : configurer le premier dispositif afin qu'il présente au moins une fonction parmi une fonction de passerelle WiFi, une fonction de passerelle Bluetooth à basse énergie et une fonction de passerelle ZigBee.

12. Dispositif, comprenant :
au moins un processeur (91) ; et
une mémoire (92) communiquant avec l'au moins un processeur (91) ; dans lequel
la mémoire (92) stocke des instructions exécutables par l'au moins un processeur (91), et les instructions sont exécutées par l'au moins un processeur (91) pour amener l'au moins un processeur (91) à mettre en œuvre le procédé selon l'une quelconque des revendications 1 à 11.

13. Système comprenant un premier dispositif (81) et au moins un deuxième dispositif (82),
dans lequel le premier dispositif (81) est le dispositif selon la revendication 12.
